# EUROPÄISCHE PATENTSCHRIFT

(11) **EP 2 268 541 B1**
(45) Veröffentlichungstag und Bekanntmachung des Hinweises auf die Patenterteilung: **04.07.2012**
(21) Anmeldenummer: 09731423.1
(22) Anmeldetag: 07.04.2009
(51) Int. Cl.: B64C 21/02, B64C 21/08

(54) **STRÖMUNGSKÖRPER UND HOCHAUFTRIEBSSYSTEM MIT EINEM SOLCHEN STRÖMUNGSKÖRPER**
AERODYNAMIC BODY, AND HIGH-LIFT DEVICE COMPRISING SUCH A BODY
CORPS AERODYNAMIQUE ET SYSTÈME HYPERSUSTENTATEUR COMPORTANT UN TEL CORPS

(30) Priorität: 07.04.2008 US 42808; 07.04.2008 DE 102008017574
(43) Veröffentlichungstag der Anmeldung: 05.01.2011
(73) Patentinhaber: Airbus Operations GmbH, 21129 Hamburg (DE)
(72) Erfinder: LORKOWSKI, Thomas, 82024 Taufkirchen (DE)
(74) Vertreter: Schatt, Markus F.
(86) Internationale Anmeldenummer: PCT/EP2009/002573
(87) Internationale Veröffentlichungsnummer: WO 2009/124728

(56) Entgegenhaltungen:
- BE-A- 358 128
- US-A- 3 005 496
- US-A- 3 692 259
- US-B1- 6 390 116
- RALPH PETZ ET AL: "Designing Actuators for active separation control experiments on high-lift configurations" NOTES ON NUMERICAL FLUID MECHANICS AND MULTIDISCIPLINARY DESIGN : NNFM, SPRINGER, DE, Bd. 95, 1. Januar 2007 (2007-01-01), Seiten 69-84, XP009123794 ISSN: 1612-2909 in der Anmeldung erwähnt

## Beschreibung

Die Erfindung betrifft einen Strömungskörper und Hochauftriebssystem mit einem solchen Strömungskörper.

Die US 3 005 496 beschreibt ein Hubschrauber-Rotorblatt, das zur Steuerung des Anstellwinkels einstellbar angeordnet ist und eine Leitung zur Führung von komprimierter Luft aufweist, in dem ein Ventilverschlussteil drehbar angeordnet ist. An der Blattspitze ist eine Reihe von Passagen angeordnet, die mittels des Ventilverschlussteils geöffnet und geschlossen werde können, die als Öffnungen von dem hohlen Strukturteil ausmünden und die zu einem Schlitz neben der Hinterkante des Blatts führen. Mit dieser Anordnung entsteht aufgrund einer Änderung des Anstellwinkels des Rotorblatts während dessen Drehung eine Gelenkbewegung relativ zwischen dem Blatt und dem Haltearm und dadurch ein Wenden der Jetöffnungen relativ zu dem Ventilverschlussteil.

Tragflächen mit einem inneren Kanal, der mit Öffnungen ausmündet, sind auch in der US 3 692 259 und der US 6 390 116 B1 offenbart.

Die US 5,772,156 A beschreibt das Absaugen von Luft durch einen Einlass an der Oberseite eines Flügels und das Ausblasen durch einen über einen Kanal mit dem Einlass verbundenen Auslass an der Unterseite des Flügels. Zum Antreiben der Strömung wird ein Kompressor eingesetzt.

Aus der US 5,366,177 A ist das Absaugen von Luft aus einem perforierten Außenhautflächenbereich an der Oberseite einer Auftriebsklappe zur Beeinflussung der Grenzschicht bekannt. Weiterhin ist nach diesem Dokument eine Saugerzeugungsvorrichtung mit einer Pumpe, einem Turbokompressor oder einem elektrisch oder hydraulisch betriebenem Vakuumsystem vorgesehen.

In der NASA-Studie "Study of the Application of Separation Control by Unsteady Excitation to Civil Transport Aircraft" von J.D.McLean et. al. vom Juni 1999 und in der Studie "Designing Actuators for Active Separation Control Experiments on High-Lift Configurations" von Ralf Petz und Wofgang Nitsche, Berlin University of Technotogy werden die Möglichkeit eines gepulsten Ausblasens von Luft an der Außenseite eines Flügels beschrieben.

Aufgabe der Erfindung ist, einen Strömungskörper und ein Hochauftriebssystem mit einem solchen Strömungskörper zu schaffen, mit dem die Beeinflussung der Strömung auf effiziente Weise erfolgen kann und der bzw. das sicher im Betrieb und flexibel im Hinblick auf sich verändernde Anströmbedingungen eingerichtet werden kann.

Diese Aufgabe wird mit den Merkmalen der unabhängigen Patentansprüche gelöst. Weitere Ausführungsformen sind in den auf diese rückbezogenen Unteransprüchen angegeben.

Mit der erfindungsgemäßen Lösung erfolgt ein gepulstes Ausblasen von Luft an der Oberseite des Strömungskörpers, der allgemein der Tragflügel eines Flugzeugs, ein Ruder oder eine Klappe, eine Hochauftriebskörper oder Hochauftriebsklappe oder ein anderer Strömungskörper sein kann.

Nach der Erfindung ist ein Strömungskörper mit einer Außenhaut mit einer in Bezug auf die Strömungsrichtung Oberseite und Unterseite und mit Seiten-Endabschnitten, die die quer zur angenommenen Strömungsrichtung gesehen seitlichen Enden des Strömungskörpers bilden, vorgesehen. Im Inneren des Strömungskörpers ist ein Kanal mit einem Strömungsantrieb mit einem Antriebsmotor und einem durch diesen angetriebenen und im Kanal angeordneten Verdichtermittel angeordnet. Der Strömungskörper weist zur Beeinflussung der Strömung am Strömungskörper an seiner Unterseite und/oder an zumindest einem seiner Seiten-Endabschnitte zumindest einen Einlass und an der Oberseite zumindest einen Auslass auf. Erfindungsgemäß ist im Kanal eine Hülse angeordnet, die mittels eines Antriebsmotors rotierbar ist. Die Hülse weist zumindest eine Ausnehmung auf, die bei einer bestimmten Drehstellung der Hülse mit dem Auslass an der Oberseite des Strömungskörpers zur zumindest teilweisen Deckung gebracht werden kann, so dass die vom Verdichter verdichtete Luft durch die Ausnehmung der Hülse und den Auslass strömt.

Das gepulste Ausblasen der Luft kommt dadurch zustande, dass die Ausnehmung der Hülse nur zeitweise in Deckung mit dem Auslass des Strömungskörpers gebracht wird.

Durch die Verwendung des Strömungsantriebs, mit dem die Luft in der Hülse angetrieben wird, können relativ große Luftmassendurchsätze erreicht werden, die zum Ausblasen an der Oberseite des Strömungskörpers benötigt werden, um eine effektive Beeinflussung der Strömung zu erreichen. Da die Druckluft mittels des Strömungsantriebs in der Nähe der Ausblasstelle erzeugt wird, verringert sich das notwendige Druckniveau erheblich. Durch diese Maßnahme ist weiterhin möglich, auf aufwendige Verrohrungen zur Zuführung der Druckluft von z.B. der Triebwerks-Zapfluft zu verzichten und lediglich elektrische Leitungen zur Energieversorgung des Strömungsantriebs und/oder der Antriebsvorrichtung für die Hülse vorzusehen, wodurch der erforderliche Einbauraum minimiert werden kann.

Wenn die Einlässe an einem Seiten-Endabschnitt oder beiden Seiten-Endabschnitten angeordnet sind, können auftretende Endkantenwirbel, die eine Lärmquelle darstellen können, durch Absaugen der Luft reduziert warden.

Erfindungsgemäß ist weiterhin ein Hochauftriebssystem mit einem Strömungskörper nach einer der erfindungsgemäße Ausführungsformen vorgesehen. Das Hochauftriebssystem weist eine Ansteuervorrichtung auf, mit der die Antriebsvorrichtung der Hülse funktional gekoppelt ist und die eine Ansteuerfunktion zur Bildung von Stellsignalen oder Stellkommandos zum Einstellen einer Drehstellung der Hülse im Kanal und/oder zum Einstellen der Drehzahl der Hülse aufweist.

Als Strömungsrichtung wird in diesem Zusammenhang die für den Strömungskörper angenommene Strömungsrichtung angesehen, d.h. die Richtung, aus der der an dem Flugzeug angebrachte Strömungskörper angeströmt wird. Dabei wird insbesondere eine Neutralstellung oder Mittelstellung des Flugzeugs und/oder der Strömungsklappe angenommen.

Im Folgenden werden Ausführungsbeispiele der Erfindung an Hand der beigefügte Figuren beschrieben, die zeigen:
- Figur 1 ein Querschnitt in Flügeltiefen-Richtung gesehen durch den Eingangsbereich einer Ausführungsform des erfindungsgemäßen Luftleitungskanals mit einem Verdichter,
- Figur 2 ein Querschnitt durch die Ausführungsform des Luftleitungskanals nach der Figur 1 in Flügelspannweiten-Richtung gesehen,
- Figur 3 eine Hochauftriebsklappe als Ausführuungsbeispiel des Strömungskörpers nach der Erfindung mit dem Einlass eines Luftleitungskanals an einem Seiteabschnitt des Strömungskörpers.

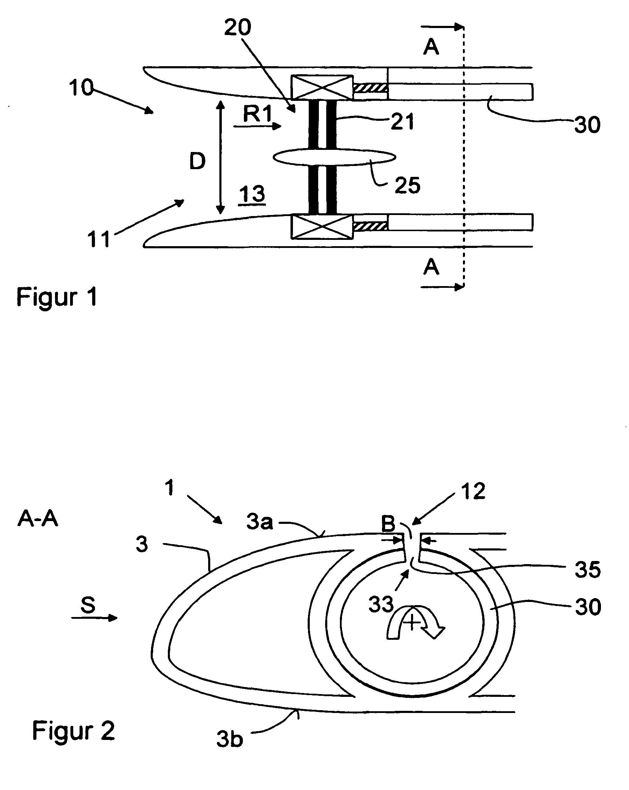

Die Figur 1 zeigt einen Teil des Kanals oder Luftleitungskanals 10, der im Inneren des Strömungskörpers 1 angeordnet ist. In insbesondere zeigt die Figur 1 den Eingangsbereich 11 a des Kanals 10. Der Eingangsbereich mündet in die Außenseite 3 des Strömungskörpers 1, so dass der Eingangsbereich 11a den Einlass 11 an der Außenseite 3 des Strömungskörpers 1 bildet.

Der Strömungskörper 1 weist generell eine Außenseite 3 mit einer in Bezug auf eine angenommene Strömungsrichtung S Oberseite 3a und Unterseite 3b. Die Oberseite 3a kann insbesondere aerodynamisch gesehen die Oberseite sein. Weiterhin weist der Strömungskörper 1 Seiten-Endabschnitte 5a, 5b auf, die die quer zur angenommenen Strömungsrichtung S gesehen seitlichen Enden des Strömungskörpers 1 bilden.

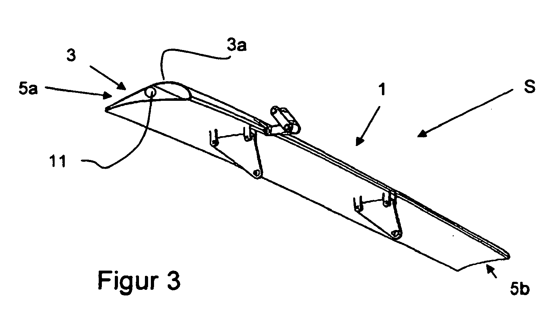

Bei dem in der Figur 3 dargestellten Ausführungsbeispiel ist der Einlass 11 des Kanals 10 an den Seiten-Endabschnitten 5a, 5b, die die quer zur angenommenen Strömungsrichtung S gesehen seitlichen Enden des Strömungskörpers 1 bilden. Der Kanal 10 kann auch zwei Einlässe 10 aufweisen, wobei ein Einlass 10 an einem ersten Endabschnitt 5a und ein zweiter Einlass 11 an einem zweiten Endabschnitt 5b gebildet ist. Alternativ oder zusätzlich kann ein Einlass 11 des Kanals 10 auch an der Unterseite 3b des Strömungskörpers 1 angeordnet sein. Der Kanal 10 kann also einen oder mehrere Einlässe 11, die an der Unterseite 3b und/oder an zumindest einem der Seiten-Endabschnitte 5a, 5b des Strömungskörpers 1 gelegen sind.

Im Kanal 10 ist eine Hülse 30 drehbar gelagert, die mit einem Antriebsmotor gekoppelt ist, so dass die Hülse 30 durch den Antriebsmotors rotiert werden kann. Die Hülse 30 weist eine Ausnehmung 33 auf, deren Lage mit der Lage des Auslasses 12 an der Oberseite 3a des Strömungskörper 1 derart korreliert, dass bei einer bestimmten Drehstellung der Hülse 30 die Ausnehmung 33 derselben mit dem Auslass 12 an der Oberseite 3a des Strömungskörpers 1 teilweise oder ganz zur Deckung gebracht werden kann. Bei einer entsprechenden Drehstellung der Hülse 30, bei der die Ausnehmung 33 und der Auslass 12 teilweise übereinander liegen, entweicht somit die vom Strömungsantrieb im Kanal 10 angetriebene Luft durch den Auslass 12.

Bei einer Ausführungsform der Erfindung erstreckt sich der Kanal 10 zumindest abschnittsweise in der Spannweiten-Richtung des Strömungskörpers 1 oder schräg zu dieser.

Die Ausnehmung 33 der rotierbaren Hülse 30 kann verschiedenartig gestaltet sein und insbesondere die Form eines Schlitzes haben, der sich in der axialen Richtung der Hülse 30 erstreckt. Weiterhin kann auch der Auslass 12 in verschiedener Weise gestaltet sein und insbesondere die Form eines Schlitzes haben, der sich in der Spannweitenrichtung des Strömungskörpers 1 erstreckt. Dabei können insbesondere die Längsrichtung der schlitzförmigen Ausnehmung 33 und die Längsrichtung eines schlitzförmigen Auslasses parallel oder in einem spitzen Winkel zueinander verlaufen.

Der Auslass 12 wie auch die Ausnehmung 33 kann aus mehreren Öffnungen gebildet sein, die entlang der Spannweitenrichtung des Strömungskörpers 1 hintereinander angeordnet sind. Der Auslass des Kanals 10 kann durch mehrere Schlitze der Oberseite 3a des Strömungskörpers 1 gebildet sein, deren Längsrichtungen quer zur Strömungsrichtung S verlaufen und die in ihrer Längsrichtung gesehen hintereinander angeordnet sind. Alternativ oder zusätzlich kann der Auslass des Kanals 10 durch mehrere Schlitze der Oberseite 3a der Strömungskörper 1 eines Flugzeugs gebildet sein, deren Längsrichtungen quer zur Strömungsrichtung S verlaufen und die in Strömungsrichtung S gesehen hintereinander angeordnet sind.

Die sich in Umfangsrichtung der Hülse 30 erstreckende Breite 35 der Hülse 30 kann größer oder kleiner als die sich in der Strömungsrichtung S erstreckenden Breite des Auslasses an der Oberseite 3a des Strömungskörpers 1 eines Flugzeugs beträgt. Insbesondere kann vorgesehen sein, dass die sich in Umfangsrichtung der Hülse 30 erstreckende Breite 35 derselben mindestens 75% der sich in der Strömungsrichtung S erstreckenden Breite des Auslasses an der Oberseite 3a des Strömungskörpers 1 eines Flugzeugs beträgt.

Die Länge des Auslasses an der Oberseite 3a des Strömungskörpers 1 kann mehr als 40% der Spannweite des Strömungskörpers 1 betragen.

Die Hülse kann mehrere Ausnehmungen 33 aufweisen, die in der Umfangsrichtung der Hülse 30 über den Umfang der Hülse 30 verteilt angeordnet sind.

Am Auslass 12 kann auch eine Durchfluss-Verstellvorrichtung angeordnet sein, die die Größe des Auslasses verändern kann, um den an dem Auslass 12 bei dem Übereinanderliegen von Ausnehmung 33 und Auslass 12 auftretenden Luftdurchsatz zu beeinflussen. Alternativ oder zusätzlich kann an der Ausnehmung 33 eine Durchfluss-Verstellvorrichtung angeordnet sein, die die Größe der Ausnehmung 33 verändern kann, um den an der Ausnehmung 33 auftretenden Luftdurchsatz zu beeinflussen.

Bei einer weiteren Ausführungsform der Erfindung kann eine oder beide der genannten Durchfluss-Verstellvorrichtungen, soweit vorgesehen, ein an dem Auslass 12 bzw. der Ausnehmung 33 angeordnetes und in die Schließstellung des Einlasses vorgespanntes Öffnungsteil aufweisen, das derart eingestellt ist, dass sich das Öffnungsteil bei einem vorbestimmten an dem Auslass 12 bzw. der Ausnehmung 33 auftretenden ersten Druck in eine offene Stellung bewegt und bei einem vorbestimmten an dem Auslass 12 bzw. der Ausnehmung 33 auftretenden zweiten Druck in die Schließstellung geht. Die Durchfluss-Verstellvorrichtung kann aktiv gesteuert sein.

Der Strömungsantrieb oder der Verdichter ein Axialverdichter 20 und das Verdichtermittel Schaufelblätter 21 aufweisen, deren Drehachse in der Längsrichtung R1 des Kanals 10 verlaufen. Der Antriebsmotor kann in einem Behälter 25 eingebaut sein, der mittels Stützteilen im Kanal 10 gehalten wird. Der Antriebsmotor kann ein Außenläufermotor sein. Alternativ kann der Verdichter ein Radialverdichter 20 sein und das Verdichtermittel ein Verdichterrad sein. Die Drehachse des Radialverdichters kann in der Längsrichtung R1 des Kanals 10 verlaufen. Alternativ kann die Drehachse des Radialverdichters winklig zur Längsrichtung R1 des Kanals 10 verläuft.

Die Hülse kann rotatorisch mit dem Verdichtermittel gekoppelt sein. In diesem Fall ist der Antriebsmotor des Verdichtermittels der Antriebsmotor der Hülse.

Alternativ ist die Hülse rotatorisch derart mit dem Verdichtermittel gekoppelt, so dass die Drehgeschwindigkeit der Hülse 30 abhängt von der Drehgeschwindigkeit des Verdichtermittels. Dabei kann die Hülse derart rotatorisch mit dem Verdichtermittel gekoppelt sein, dass die Hülse 30 in derselben Drehgeschwindigkeit wie das Verdichtermittel gedreht wird.

Alternativ kann die Hülse rotatorisch mit dem Verdichtermittel über ein Getriebe gekoppelt sein, so dass die Drehgeschwindigkeit der Hülse von der Drehgeschwindigkeit des Verdichtermittels abhängt. Dabei kann die Übersetzung des Getriebes fest eingestellt oder einstellbar ist.

Bei einem weiteren Ausführungsbeispiel der Erfindung kann an der Ausnehmung 33 der Hülse 30 eine Durchfluss-Verstellvorrichtung angeordnet sein, die die Größe der Ausnehmung 33 der Hülse 30 verändern kann, um den an der Ausnehmung 33 auftretenden Luftdurchsatz zu beeinflussen.

In einem weiteren Ausführungsbeispiel der Erfindung ist ein Hochauftriebssystem eines Flugzeugs mit einem Strömungskörper 1 nach einem der beschriebenen Ausführungsbeispiele vorgesehen. Das Hochauftriebssystem weist eine Ansteuervorrichtung auf, mit der die Antriebsvorrichtung der Hülse und/oder des Verdichtermittels funktional gekoppelt ist und die eine Ansteuerfunktion zur Bildung von Stellsignalen oder Stellkommandos zum Einstellen einer Drehstellung der Hülse im Kanal und/oder zum Einstellen der Drehzahl der Hülse bzw. zum Einstellen einer Drehstellung der Hülse im Kanal und/oder zum Einstellen der Drehzahl des Verdichtermittels aufweist. Die Ansteuervorrichtung kann dabei insbesondere eine Eingangsvorrichtung zum Empfang von Sensor- und/oder Systemdaten aufweisen und die Ansteuerfunktion kann derart eingerichtet sein, dass diese Stellkommandos zum Einstellen einer Drehstellung der Hülse 30 im Kanal 10 und/oder der Drehzahl der Hülse 30 und/oder zum Einstellen der Drehzahl des Verdichtermittels in Abhängigkeit des Verstellzustands der Strömungskörper 1 eines Flugzeugs ermittelt.

Bei einem weiteren Ausführungsbeispiel kann die Ansteuervorrichtung eine EingangsVorrichtung aufweisen, mit der die Ansteuervorrichtung Sensor- und/oder Systemdaten empfangen kann. Dabei kann die Ansteuerfunktion derart gestaltet sein, dass diese die Stellkommandos zum Einstellen einer Drehstellung der Hülse 30 im Kanal 10 und/oder der Drehzahl der Hülse 30 in Abhängigkeit der Sensor- und/oder Systemdaten ermittelt.

Die Ansteuervorrichtung kann in dem Strömungskörper 1 integriert sein.

Die Eingangsvorrichtung der Ansteuervorrichtung kann derart eingerichtet sein und insbesondere eine Funktion aufweisen, mit der Daten von dem Flugführungssystem des Flugzeugs empfangen werden können. Die Daten können Luftdaten wie der statische und/oder dynamische Druck und/oder Systemdaten sein. Als Systemdaten können dabei Betriebsfunktionen verwendet werden, die insbesondere die Flugphase wie z.B. Start oder Landung kennzeichnen. Die Ansteuerfunktion kann derart ausgebildet sein, dass die Stellkommandos zum Einstellen einer Drehstellung der Hülse 30 im Kanal 10 und/oder der Drehzahl der Hülse 30 in Abhängigkeit der Daten eines Flugführungssystems ermittelt.

Alternativ oder zusätzlich kann die Eingangsvorrichtung der Ansteuervorrichtung derart eingerichtet sein und insbesondere eine Funktion aufweisen, mit der z.b. von einem Flugführungssystem Daten wie Luftdaten, also z.B. der statische und/oder dynamische Druck, und/oder Systemdaten insbesondere zur Bezeichnung von Betriebsfunktionen wie Flugphasen empfangen werden können und die Ansteuerfunktion kann derart ausgebildet sein, dass diese Stellkommandos zum Einstellen einer Drehzahl des Verdichtermittels oder einer Leistung des Verdichtermittels in Abhängigkeit der genannten Daten z.B. des Flugführungssystems ermittelt. Dadurch kann eine entsprechende Steuerung der Drehzahl bzw. der Verdichterleistung vorgenommen werden, um einen zustandsabhängigen Luftmassendurchsatz zu erreichen.

Dabei können die von dem Flugführungssystem des Flugzeugs empfangenen Daten die Drehstellung der Hülse 30 im Kanal 10 und/oder die Drehzahl der Hülse 30 beinhalten und dass die Ansteuerfunktion kann derart eingerichtet sein, dass diese Stellkommandos für die Drehstellung der Hülse 30 im Kanal 10 und/oder der Drehzahl der Hülse 30 in Abhängigkeit der Verstellposition der Strömungskörper 1 eines Flugzeugs ermittelt. Bei Übermittlung einer Drehstellung an die Ansteuerfunktion und somit auch an die Antriebsvorrichtung der Hülse 30 wird diese in eine Soll-Position eingestellt. Diese Soll-Position kann eine Position sein, bei der die Ausnehmung 33 oder eine der Ausnehmungen der Hülse ganz oder teilweise in Deckung mit dem Auslass 12 oder mehreren Auslässen 12 des Kanals 10 gebracht ist. In diesem Zustand erfolgt also kein gepulstes Ausströmen der verdichteten Luft.

Bei einem anderen Ausführungsbeispiel kann die Ansteuerfunktion derart gestaltet sein, dass diese Stellkommandos für die Drehstellung der Hülse 30 im Kanal 10 und/oder der Drehzahl der Hülse 30 in Abhängigkeit von Luftdaten, die von dem Flugführungssystem übermittelt worden sind, ermittelt.

Bei diesen Ausführungsbeispielen können als Luftdaten der Anstellwinkel des Flugzeugs und/oder die Geschwindigkeit und/oder die Fluglage des Flugzeugs verwendet werden.

Bei einem weiteren Ausführungsbeispiel kann vorgesehen sein, dass die Ansteuervorrichtung für die Kommandierung der Drehstellung der Hülse 30 im Kanal 10 und/oder der Drehzahl der Hülse 30 eine Vergleichsfunktion aufweist, die übermittelte Luftdaten und/oder die Verstellposition der Strömungskörper 1 eines Flugzeugs mit einem ersten Sollwert und mit einem zweiten Sollwert vergleicht, wobei die Ansteuerfunktion bei bereichsweisem Erreichen des ersten Sollwertes Ansteuerkommandos zur Aktivierung des Antriebs der Hülse 30 und bei bereichsweisem Erreichen des zweiten Sollwertes Ansteuerkommandos zum Stoppen des Antriebs der Hülse 30 erzeugt und an die Durchfluss-Verstellvorrichtung übermittelt.

Die Ansteuervorrichtung mit den vorgenannten Funktionen kann derart eingerichtet sein und sowohl mit einer Antriebsvorrichtung zum Antrieb des Verdichtermittels als auch mit einer Antriebsvorrichtung zum Antrieb der Hülse gekoppelt sein, dass sowohl das Verdichtermittel als auch die Hülse angesteuert und in Drehung versetzt werden. Dabei können die Ansteuerungskommandos für die Hülse und das Verdichtermittel jeweils getrennt nach einer der zuvor genannten Ansteuerfunktionen und für diese vorgesehenen Eingangsgrößen ermittelt werden.

Auch können die Ansteuerkommandos für das Verdichtermittel und für die Hülse funktional gekoppelt sein, so dass
- die Drehzahl der Hülse zumindest in einem Zeitabschnitt gleich der Drehzahl des Verdichtermittels ist,
- die Drehzahl der Hülse zumindest in einem Zeitabschnitt einen Bruchteil oder ein Vielfaches der Drehzahl des Verdichtermittels beträgt oder
- die Drehzahl der Hülse zumindest in einem Zeitabschnitt über einen vorgegebenen funktionalen Zusammenhang mit der Drehzahl des Verdichtermittels gekoppelt ist.

Die Ansteuervorrichtung kann mit einem im Rumpf befindlichen Rechner des Flugführungssystems integriert sein und die Stellkommandos über eine Kommandoleitung an die Durchfluss-Verstellvorrichtung übermittelt werden.

Bei den vorgenannten Ausführungsbeispielen kann der Strömungskörper 1 zumindest einen Sensor und optional zusätzlich eine Sensorfunktion wie z.B. einen Drucksensor aufweisen, der an dem Strömungskörper 1 zur Messung des statischen Druckes der Luftströmung angeordnet ist und der mit der Eingangsvorrichtung zur Übertragung eines gemessenen Druckes an die Ansteuerfunktion funktional verbunden ist. Dabei ist die Ansteuerfunktion derart gestaltet, dass diese Stellkommandos in Abhängigkeit des gemessenen Druckes ermittelt. Der Drucksensor kann am Einlass 11 und/oder am Auslass 12 des Kanals 10 angeordnet sein. Der Sensor kann auch in der Außenseite 3a angebracht sein, um die Qualität der Strömung und insbesondere eine Ablösung der Strömung vom Strömungskörper zu erkennen. Der Sensor und optional zusätzlich eine Sensorfunktion können derart gestaltet sein, das ein Druck, eine Wandschubspannung und/oder eine Strömungsgeschwindigkeit ermittelt werden kann.

Bei dieser Ausführungsform kann zusätzlich vorgesehen sein, dass die Ansteuervorrichtung eine Vergleichsfunktion aufweist, mit der der Druck am zumindest einen Einlass und am zumindest einen Auslass verglichen wird und das die Stellkommandos in Abhängigkeit der ermittelten Druckdifferenz ermittelt werden.

Die Ansteuervorrichtung in den beschriebenen Varianten kann in einem zentralen Rechner des Hochauftriebssystems, das die Verstellung der Hochauftriebsklappen kommandiert, integriert sein.

Bei einem weiteren Ausführungsbeispiel kann die Ansteuervorrichtung eine Tabelle mit einer Zuordnung von vorgegebenen operationellen Daten mit Soll-Stellpositionen der Durchlass-Verstellvorrichtung und eine Vergleichsfunktion aufweisen, mit der gemessene operationelle Daten mit den in der Vergleichstabelle gespeicherten operationellen Daten verglichen und bei bereichsweiser Übereinstimmung die jeweils zugeordnete Soll-Stellposition an die Einlass-Verstelleinrichtung übermittelt.

## Patentansprüche

1. Strömungskörper (1) eines Flugzeugs, insbesondere ein Tragflügel, eine Hinterkantenklappe oder eine Vorderkantenklappe, mit einer Außenseite (3) mit einer in Bezug auf die Strömungsrichtung Oberseite (3a) und Unterseite (3b), mit Seiten-Endabschnitten (5a, 5b), die die quer zur angenommenen Strömungsrichtung (S) gesehen seitlichen Enden des Strömungskörpers (1) bilden, wobei im Inneren des Strömungskörpers (1) ein Kanal (10) mit einem Strömungsantrieb mit einem Antriebsmotor und einem durch diesen angetriebenen und im Kanal (10) angeordneten Verdichtermittel, mit zumindest einem Einlass (11) an der Unterseite (3b) und/oder an zumindest einem der Seiten-Endabschnitte (5a, 5b) des Strömungskörpers (1) und mit zumindest einem Auslass (12) an der Oberseite (3a) des Strömungskörpers (1) zur Beeinflussung der Strömung am Strömungskörper (1) angeordnet ist,
**dadurch gekennzeichnet, dass**
im Kanal (10) mittels eines Antriebsmotors rotierbar eine Hülse (30) gelegen ist, die zumindest eine Ausnehmung (33) aufweist, die bei einer bestimmten Drehstellung der Hülse (30) mit dem zumindest einen Auslass (12) an der Oberseite (3a) des Strömungskörpers (1) zur zumindest teilweisen Deckung gebracht werden kann, so dass die vom Verdichter verdichtete Luft durch die Ausnehmung (33) der Hülse (30) und den Auslass (12) strömt.

2. Strömungskörper (1) eines Flugzeugs nach dem Anspruch 1, **dadurch gekennzeichnet, dass** die Ausnehmung (33) der rotierbaren Hülse (30) die Form eines Schlitzes hat, der sich in der axialen Richtung der Hülse (30) erstreckt, oder dass die Hülse mehrere Ausnehmungen (33) aufweist, die in der Umfangsrichtung der Hülse (30) über den Umfang der Hülse (30) verteilt angeordnet sind..

3. Strömungskörper (1) eines Flugzeugs nach dem Anspruch 1 oder 2, **dadurch gekennzeichnet, dass** der Auslass (12) die Form eines Schlitzes hat, der sich in der Spannweitenrichtung des Strömungskörpers (1) erstreckt, oder dass der Auslass (12) aus mehreren Öffnungen gebildet ist, die entlang der Spannweitenrichtung des Strömungskörpers (1) hintereinander angeordnet sind, oder dass der Auslass des Kanals (10) durch mehrere Schlitze der Oberseite (3a) des Strömungskörpers (1) gebildet ist, deren Längsrichtungen quer zur Strömungsrichtung verlaufen und die in ihrer Längsrichtung gesehen hintereinander angeordnet sind, oder dass der Auslass des Kanals (10) durch mehrere Schlitze der Oberseite (3a) der Strömungskörper (1) eines Flugzeugs gebildet sind, deren Längsrichtungen quer zur Strömungsrichtung (S) verlaufen und die in Strömungsrichtung (S) gesehen hintereinander angeordnet sind.

4. Strömungskörper (1) eines Flugzeugs nach einem der voranstehenden Ansprüche, **dadurch gekennzeichnet, dass** die sich in Umfangsrichtung der Hülse (30) erstreckende Breite (35) derselben mindestens 75% der sich in der Strömungsrichtung (S) erstreckenden Breite des Auslasses an der Oberseite (3a) des Strömungskörpers (1) eines Flugzeugs beträgt.

5. Strömungskörper (1) eines Flugzeugs nach einem der voranstehenden Ansprüche, **dadurch gekennzeichnet, dass** am Auslass (12) eine Durchfluss-Verstellvorrichtung angeordnet ist, die die Größe des Auslasses verändern kann, um den an dem Auslass (12) auftretenden Luftdurchsatz zu beeinflussen.

6. Strömungskörper (1) eines Flugzeugs nach dem Anspruch 5, **dadurch gekennzeichnet, dass** die Durchfluss-Verstellvorrichtung ein an dem Auslass (12) angeordnetes und in die Schließstellung des Einlasses vorgespanntes Öffnungsteil aufweist, das derart eingestellt ist, dass sich das Öffnungsteil bei einem vorbestimmten an dem Auslass (12) auftretenden ersten Druck in eine offene Stellung bewegt und bei einem vorbestimmten an dem Auslass (12) auftretenden zweiten Druck in die Schließstellung geht.

7. Strömungskörper (1) eines Flugzeugs nach einem der voranstehenden Ansprüche, **dadurch gekennzeichnet, dass** an der Ausnehmung (33) eine Durchfluss-Verstellvorrichtung angeordnet ist, die die Größe der Ausnehmung verändern kann, um den an der Ausnehmung (33) auftretenden Luftdurchsatz zu beeinflussen.

8. Strömungskörper (1) eines Flugzeugs nach dem Anspruch 7, **dadurch gekennzeichnet, dass** die Durchfluss-Verstellvorrichtung ein an der Ausnehmung (33) angeordnetes und in die Schließstellung des Einlasses vorgespanntes Öffnungsteil aufweist, das derart eingestellt ist, dass sich das Öffnungsteil bei einem vorbestimmten an der Ausnehmung (33) auftretenden ersten Druck in eine offene Stellung bewegt und bei einem vorbestimmten an der Ausnehmung (33) auftretenden zweiten Druck in die Schließstellung geht.

9. Strömungskörper (1) eines Flugzeugs nach einem der Ansprüche 5 bis 8, **dadurch gekennzeichnet, dass** die Durchfluss-Verstellvorrichtung aktiv gesteuert wird.

10. Strömungskörper (1) eines Flugzeugs nach einem der voranstehenden Ansprüche, **dadurch gekennzeichnet, dass** der Strömungsantrieb ein Axialverdichter (20) und das Verdichtermittel Schaufelblätter (21) aufweist, deren Drehachse in der Längsrichtung (R1) des Kanals (10) verlaufen.

11. Strömungskörper (1) eines Flugzeugs nach einem der voranstehenden Ansprüche 1 bis 9, **dadurch gekennzeichnet, dass** der Verdichter ein Radialverdichter (20) und das Verdichtermittel ein Verdichterrad aufweist.

12. Strömungskörper (1) eines Flugzeugs nach einem der voranstehenden Ansprüche, **dadurch gekennzeichnet, dass** die Hülse rotatorisch mit dem Verdichtermittel gekoppelt ist, so dass der Antriebsmotor des Verdichtermittels der Antriebsmotor der Hülse ist.

13. Hochauftriebssystem eines Flugzeugs mit einem Strömungskörper (1) nach einem der voranstehenden Ansprüche, **dadurch gekennzeichnet, dass** das Hochauftriebssystem eine Ansteuervorrichtung aufweist, mit der die Antriebsvorrichtung der Hülse und/oder die Antriebsvorrichtung des Verdichtermittels funktional gekoppelt ist und die eine Ansteuerfunktion zur Bildung von Stellsignalen oder Stellkommandos zum Einstellen einer Drehstellung der Hülse im Kanal (10) und/oder zum Einstellen der Drehzahl der Hülse und/oder zum Einstellen einer Drehstellung des Verdichtermittels und/oder zum Einstellen der Drehzahl des Verdichtermittels aufweist.

14. Hochauftriebssystem nach dem Anspruch 13, **dadurch gekennzeichnet, dass** die Ansteuervorrichtung eine Eingangsvorrichtung zum Empfang von Sensor- und/oder Systemdaten aufweist, und dass die Ansteuerfunktion die Stellkommandos zum Einstellen einer Drehstellung der Hülse (30) im Kanal (10) und/oder der Drehzahl der Hülse (30) in Abhängigkeit des Verstellzustands der Strömungskörper (1) eines Flugzeugs und/oder in Abhängigkeit der Sensor- und/oder Systemdaten und/oder in Abhängigkeit der Verstellposition der Strömungskörper (1) eines Flugzeugs ermittelt.

15. Hochauftriebssystem nach dem Anspruch 14, **dadurch gekennzeichnet, dass** die Ansteuerfunktion die Stellkommandos für die Drehstellung der Hülse (30) im Kanal (10) und/oder der Drehzahl der Hülse (30) in Abhängigkeit von Luftdaten, die von dem Flugführungssystem übermittelt worden sind,
und insbesondere von dem Anstellwinkel des Flugzeugs und/oder der Geschwindigkeit und/oder der Fluglage des Flugzeugs ermittelt.

16. Hochauftriebssystem nach einem der voranstehenden Ansprüche 13 bis 15, **dadurch gekennzeichnet, dass** die Ansteuervorrichtung für die Kommandierung der Drehstellung der Hülse (30) im Kanal (10) und/oder der Drehzahl der Hülse (30) eine Vergleichsfunktion aufweist, die übermittelte Luftdaten und/oder die Verstellposition der Strömungskörper (1) eines Flugzeugs mit einem ersten Sollwert und mit einem zweiten Sollwert vergleicht, wobei die Ansteuerfunktion bei bereichsweisem Erreichen des ersten Sollwertes Ansteuerkommandos zur Aktivierung des Antriebs der Hülse (30) und bei bereichsweisem Erreichen des zweiten Sollwertes Ansteuerkommandos zum Stoppen des Antriebs der Hülse (30) erzeugt und an die Durchfluss-Verstellvorrichtung übermittelt.

17. Hochauftriebssystem nach einem der Ansprüche 13 bis 16, **dadurch gekennzeichnet, dass** der Strömungskörper (1) zumindest einen Drucksensor aufweist, der an dem Strömungskörper (1) zur Messung des statischen Druckes der Luftströmung angeordnet ist und der mit der Eingangsvorrichtung zur Übertragung eines gemessenen Druckes an die Ansteuerfunktion funktional verbunden ist, und dass die Ansteuerfunktion derart gestaltet ist, dass diese Stellkommandos in Abhängigkeit des gemessenen Druckes ermittelt.

18. Hochauftriebssystem nach dem Anspruch 17, **dadurch gekennzeichnet, dass** die Ansteuervorrichtung eine Vergleichsfunktion aufweist, mit der der Druck am zumindest einen Einlass und am zumindest einen Auslass verglichen wird und das die Stellkommandos in Abhängigkeit der ermittelten Druckdifferenz ermittelt werden.

## Claims

1. An aerodynamic body (1) of an aircraft, in particular an airfoil, a leading-edge device or a trailing-edge device, with an outside (3) with a top (3a) and bottom (3b) in relation to the direction of airflow, with lateral end parts (5a, 5b) that form the lateral ends of the aerodynamic body (1) when viewed across the assumed direction of airflow (S), wherein in the interior of the aerodynamic body (1) a duct (10) with an airflow drive with a drive motor and a compressor means that is driven by the aforesaid and that is arranged in the duct (10) is arranged, with at least one inlet (11) at the bottom (3b) and/or at at least one of the lateral end parts (5a, 5b) of the aerodynamic body (1) and with at least one outlet (12) at the top (3a) of the aerodynamic body (1) for influencing the airflow at the aerodynamic body (1) being arranged,
**characterised in that**
in the duct (10) a sleeve (30) is arranged which is rotatable by means of a drive motor, which sleeve (30) comprises at least one recess (33) which at a particular rotational position of the sleeve (30) can be made to at least in part coincide with the at least one outlet (12) at the top (3a) of the aerodynamic body (1) so that the air that has been compressed by the compressor flows through the recess (33) in the sleeve (30) and through the outlet (12).

2. The aerodynamic body (1) of an aircraft according to claim 1, **characterised in that** the recess (33) of the rotatable sleeve (30) has the form of a slit that extends in axial direction of the sleeve (30) or that the sleeve comprises several recesses (33) which in circumferential direction of the sleeve (30) are arranged so as to be distributed over the circumference of the sleeve (30).

3. The aerodynamic body (1) of an aircraft according to claim 1 or 2, **characterised in that** the outlet (12) has the form of a slit that extends in span direction of the aerodynamic body (1) or that the outlet (12) comprises several apertures that are arranged one behind the other along the span direction of the aerodynamic body (1) or that the outlet of the duct (10) is formed by several slits at the top (3a) of the aerodynamic body (1) with the longitudinal directions of said slits extending across the direction of airflow, and with said slits being arranged one behind the other when viewed in their longitudinal direction or that the outlet of the duct (10) is formed by several slits at the top (3a) of the aerodynamic body (1) of an aircraft, with the longitudinal directions of said slits extending across the direction of airflow (S), and with said slits being arranged one behind the other when viewed in the direction of airflow (S).

4. The aerodynamic body (1) of an aircraft according to any one of the preceding claims, **characterised in that** the width (35) of the sleeve (30), which width (35) extends in circumferential direction of said sleeve (30), measures at least 75% of the width of the outlet at the top (3a) of the aerodynamic body (1) of an aircraft, which width extends in the direction of airflow (S).

5. The aerodynamic body (1) of an aircraft according to any one of the preceding claims, **characterised in that** at the outlet (12) a flow-through adjustment device is arranged which can change the size of the outlet in order to influence the air throughput that occurs at the outlet (12).

6. The aerodynamic body (1) of an aircraft according to claim 5, **characterised in that** the flow-through adjustment device comprises an aperture part that is arranged on the outlet (12) and that is pre-tensioned to the closed position of the inlet, which aperture part is set in such a manner that the aperture part at a predetermined first pressure occurring at the outlet (12) moves to an open position, while at a predetermined second pressure occurring at the outlet (12) moves to the closed position.

7. The aerodynamic body (1) of an aircraft according to any one of the preceding claims, **characterised in that** at the recess (33) a flow-through adjustment device is arranged that can change the size of the recess in order to influence the air throughput that occurs at the recess (33).

8. The aerodynamic body (1) of an aircraft according to claim 7, **characterised in that** the flow-through adjustment device comprises an aperture part that is arranged on the recess (33) and that is pre-tensioned to the closed position of the inlet, which aperture part is set in such a manner that the aperture part at a predetermined first pressure occurring at the recess (33) moves to an open position, while at a predetermined second pressure occurring at the recess (33) moves to the closed position.

9. The aerodynamic body (1) of an aircraft according to any one of claims 5 to 8, **characterised in that** the flow-through adjustment device is actively controlled.

10. The aerodynamic body (1) of an aircraft according to any one of the preceding claims, **characterised in that** the airflow drive is an axial compressor (20) and the compressor means comprises impeller blades (21) whose rotary axis extends in longitudinal direction (R1) of the duct (10).

11. The aerodynamic body (1 ) of an aircraft according to any one of the preceding claims 1 to 9, **characterised in that** the compressor is a radial compressor (20) and the compressor means comprises a compressor impeller.

12. The aerodynamic body (1) of an aircraft according to any one of the preceding claims, **characterised in that** the sleeve is rotationally coupled to the compressor means so that the drive motor of the compressor means is the drive motor of the sleeve.

13. A high-lift system of an aircraft with an aerodynamic body (1) according to any one of the preceding claims, **characterised in that** the high-lift system comprises a control device by means of which the drive device of the sleeve and/or the drive device of the compressor means is functionally coupled, and which control device comprises a control function to form positioning signals or positioning commands for setting a rotational position of the sleeve in the duct (10) and/or for setting the speed of rotation of the sleeve and/or for setting a rotational position of the compressor means and/or for setting the speed of rotation of the compressor means.

14. The high-lift system according to claim 13, **characterised in that** the control device is an input device for receiving sensor data and/or system data, and the control function determines the positioning commands for setting a rotational position of the sleeve (30) in the duct (10) and/or the speed of rotation of the sleeve (30) depending on the adjustment state of the aerodynamic body (1) of an aircraft and/or depending on the sensor data and/or system data and/or depending on the adjustment position of the aerodynamic body (1) of an aircraft.

15. The high-lift system according to claim 14, **characterised in that** the control function determines the positioning commands relating to the rotational position of the sleeve (30) in the duct (10) and/or the speed of rotation of the sleeve (30) depending on air data that has been transmitted by the flight control system and in particular depending on the angle of attack of the aircraft and/or the speed and/or the flight attitude of the aircraft.

16. The high-lift system according to any one of the claims 13 to 15, **characterised in that** the control device for commanding the rotational position of the sleeve (30) in the duct (10) and/or the speed of rotation of the sleeve (30) comprises a comparison function that compares transmitted air data and/or the adjustment position of the aerodynamic body (1) of an aircraft with a first desired value and with a second desired value, wherein when the first desired value is attained in some regions the control function generates control commands for activating the drive of the sleeve (30), and when the second desired value is attained in some regions the control function generates control commands for stopping the drive of the sleeve (30) and transmits the aforesaid to the flow-through adjustment device.

17. The high-lift system according to any one of the preceding claims 13 to 17, **characterised in that** the aerodynamic body (1) comprises at least one pressure sensor that is arranged on the aerodynamic body (1) for the purpose of measuring the static pressure of the airflow, and that is functionally connected to the input device for the purpose of transmitting the measured pressure to the control function, and **in that** the control function is designed in such a manner that it determines positioning commands depending on the measured pressure.

18. The high-lift system according to claim 17, **characterised in that** the control device comprises a comparison function by means of which the pressures on the at least one inlet and on the at least one outlet are compared, and **in that** the positioning commands are determined depending on the pressure differential determined.

## Revendications

1. Corps d'écoulement (1) d'un aéronef, en particulier une aile portante, un volet de bord de fuite ou d'attaque, comprenant un côté extérieur (3) avec une face supérieure (3a) et une face inférieure (3b) par rapport au sens d'écoulement, avec des sections d'extrémité latérales (5a, 5b) qui forment les extrémités latérales du corps d'écoulement (1) vues transversalement au sens d'écoulement (S) supposé, sachant qu'est disposé à l'intérieur du corps d'écoulement (1), un canal (10) comprenant un entraînement d'écoulement avec un moteur d'entraînement et un moyen de compresseur entraîné par celui-ci et disposé dans le canal (10), avec au moins une admission (11) sur la face inférieure (3b) et/ou sur au moins une des sections d'extrémité latérales (5a, 5b) du corps d'écoulement (1) et avec au moins une évacuation (12) sur la face supérieure (3a) du corps d'écoulement (1) pour influer sur l'écoulement sur le corps d'écoulement (1),
**caractérisé en ce**
**qu'**un manchon (30) est placé de manière à pouvoir tourner dans le canal (10) via un moteur d'entraînement, lequel présente au moins un évidement (33) qui, dans une position de rotation définie du manchon (30), peut être amené au moins en recouvrement partiel avec l'au moins une évacuation (12) sur la face supérieure (3a) du corps d'écoulement (1), de façon à ce que l'air comprimé par le compresseur s'écoule à travers l'évidement (33) du manchon (30) et l'évacuation (12).

2. Corps d'écoulement (1) d'un aéronef selon la revendication 1, **caractérisé en ce que** l'évidement (33) du manchon (30) rotatif a la forme d'une fente qui s'étend dans le sens axial du manchon (30), ou que le manchon présente plusieurs évidements (33) qui sont disposés en étant répartis dans le sens périphérique du manchon (30) au-dessus du pourtour du manchon (30).

3. Corps d'écoulement (1) d'un aéronef selon la revendication 1 ou 2, **caractérisé en ce que** l'évacuation (12) a la forme d'une fente qui s'étend dans le sens d'envergure du corps d'écoulement (1), ou que l'évacuation (12) est formée de plusieurs ouvertures qui sont disposées l'une derrière l'autre le long du sens d'envergure du corps d'écoulement (1), ou que l'évacuation du canal (10) est formée par plusieurs fentes de la face supérieure (3a) du corps d'écoulement (1), dont les sens longitudinaux sont transversaux au sens d'écoulement et qui sont disposées l'une derrière l'autre vu dans leur sens longitudinal, ou que l'évacuation du canal (10) est formée par plusieurs fentes de la face supérieure (3a) du corps d'écoulement (1) d'un aéronef, dont les sens longitudinaux sont transversaux au sens d'écoulement (S) et qui sont disposées l'une derrière l'autre vu dans le sens d'écoulement (S).

4. Corps d'écoulement (1) d'un aéronef selon l'une des revendications précédentes, **caractérisé en ce que** la largeur (35) s'étendant dans le sens périphérique du manchon (30) fait au moins 75% de la largeur, s'étendant dans le sens d'écoulement (S), de l'évacuation sur la face supérieure (3a) du corps d'écoulement (1) d'un aéronef.

5. Corps d'écoulement (1) d'un aéronef selon l'une des revendications précédentes, **caractérisé en ce qu'**un dispositif de réglage du débit est disposé sur l'évacuation (12), lequel peut modifier la taille de l'évacuation pour influer sur le débit d'air arrivant sur l'évacuation (12).

6. Corps d'écoulement (1) d'un aéronef selon la revendication 5, **caractérisé en ce que** le dispositif de réglage du débit présente une pièce d'ouverture disposée sur l'évacuation (12) et précontrainte dans la position de fermeture de l'admission, qui est ainsi réglée que la pièce d'ouverture se déplace dans une position ouverte avec une première pression prédéfinie arrivant sur l'évacuation (12) et passe à la position de fermeture avec une seconde pression prédéfinie arrivant sur l'évacuation (12).

7. Corps d'écoulement (1) d'un aéronef selon l'une des revendications précédentes, **caractérisé en ce qu'**un dispositif de réglage du débit est disposé sur l'évidement (33), lequel peut modifier la taille de l'évidement pour influer sur le débit d'air arrivant sur l'évidement (33).

8. Corps d'écoulement (1) d'un aéronef selon la revendication 7, **caractérisé en ce que** le dispositif de réglage du débit présente une pièce d'ouverture disposée sur l'évidement (33) et précontrainte dans la position de fermeture de l'admission, qui est ainsi réglée que la pièce d'ouverture se déplace dans une position ouverte avec une première pression prédéfinie arrivant sur l'évidement (33) et passe à la position de fermeture avec une seconde pression prédéfinie arrivant sur l'évidement (33).

9. Corps d'écoulement (1) d'un aéronef selon l'une des revendications 5 à 8, **caractérisé en ce que** le dispositif de réglage du débit est commandé activement.

10. Corps d'écoulement (1) d'un aéronef selon l'une des revendications précédentes, **caractérisé en ce que** l'entraînement d'écoulement présente un compresseur axial (20) et que le moyen de compresseur présente des aubes (21) dont les axes de rotation s'étendent dans le sens longitudinal (R1) du canal (10).

11. Corps d'écoulement (1) d'un aéronef selon l'une des revendications précédentes 1 à 9, **caractérisé en ce que** le compresseur est un compresseur radial (20) et que le moyen de compresseur présente une roue à aubes de compresseur.

12. Corps d'écoulement (1) d'un aéronef selon l'une des revendications précédentes, **caractérisé en ce que** le manchon est couplé de manière rotative au moyen de compresseur, de façon à ce que le moteur d'entraînement du moyen de compresseur soit le moteur d'entraînement du manchon.

13. Système hypersustentateur d'un aéronef comprenant un corps d'écoulement (1) selon l'une des revendications précédentes, **caractérisé en ce que** le système hypersustentateur présente un dispositif de commande avec lequel le dispositif d'entraînement du manchon et/ou le dispositif d'entraînement du moyen de compresseur est couplé de manière fonctionnelle, et qui présente une fonction de commande pour former des signaux ou des commandes de réglage pour régler une position de rotation du manchon dans le canal (10) et/ou pour régler le nombre de tours du manchon et/ou pour régler une position de rotation du moyen de compresseur et/ou pour régler le nombre de tours du moyen de compresseur.

14. Système hypersustentateur selon la revendication 13, **caractérisé en ce que** le dispositif de commande présente un dispositif d'entrée pour recevoir des données de capteurs et/ou du système, et que la fonction de commande calcule les commandes de réglage pour régler une position de rotation du manchon (30) dans le canal (10) et/ou le nombre de tours du manchon (30) en fonction de la condition de réglage du corps d'écoulement (1) d'un aéronef et/ou en fonction des données de capteurs et/ou du système et/ou en fonction de la position de réglage des corps d'écoulement (1) d'un aéronef.

15. Système hypersustentateur selon la revendication 14, **caractérisé en ce que** le dispositif de commande calcule les commandes de réglage pour la position de rotation du manchon (30) dans le canal (10) et/ou le nombre de tours du manchon (30) en fonction de données sur l'air qui ont été transmises par le système de pilotage, et en particulier de l'angle d'approche de l'aéronef et/ou de la vitesse et/ou de l'attitude de vol de l'aéronef.

16. Système hypersustentateur selon l'une des revendications précédentes 13 à 15, **caractérisé en ce que** le dispositif de commande, pour commander la position de rotation du manchon (30) dans le canal (10) et/ou le nombre de tours du manchon (30), présente une fonction de comparaison qui compare les données sur l'air transmises et/ou la position de réglage des corps d'écoulement (1) d'un aéronef à une première valeur de consigne et à une seconde valeur de consigne, sachant que la fonction de commande, lorsque la première valeur de consigne est atteinte par zones, produit des commandes pour activer l'entraînement du manchon (30) et lorsque la seconde valeur de consigne est atteinte par zones, produit des commandes pour arrêter l'entraînement du manchon (30), et les transmet au dispositif de réglage du débit.

17. Système hypersustentateur selon l'une des revendications précédentes 13 à 16, **caractérisé en ce que** le corps d'écoulement (1) présente au moins un capteur de pression disposé sur le corps d'écoulement (1) pour mesurer la pression statique de l'écoulement de l'air et qui est relié de manière fonctionnelle au dispositif d'entrée pour transmettre une pression mesurée à la fonction de commande, et que la fonction de commande est ainsi formée qu'elle calcule des commandes de réglage en fonction de la pression mesurée.

18. Système hypersustentateur selon la revendication 17, **caractérisé en ce que** le dispositif de commande présente une fonction de comparaison avec laquelle la pression sur au moins une admission et au moins une évacuation est comparée et que les commandes de réglage sont calculées en fonction de la différence de pression calculée.
